# EUROPEAN PATENT APPLICATION

(11) **EP 4 682 036 A1**
(43) Date of publication of application: **21.01.2026**
(21) Application number: 24382787.0
(22) Date of filing: 18.07.2024
(51) Int. Cl.: B62M 17/00, B62M 3/00

(54) **POWER TRANSMISSION FOR VEHICLES**

(71) Applicant: Future Fit Engineering, S.L., 08172 Sant Cugat Del Vallès (ES)
(72) Inventor: DE LUCA, Andrea, 08172 Sant Cugat del Vallès (ES)
(74) Representative: ZBM Patents - Zea, Barlocci & Markvardsen

(57) **Abstract**

The power transmission (100) for vehicles comprises a driving assembly (10a; 10b) for rotating a driving bevel gear (20) and a transmission shaft (30) having a first driven bevel gear (40) engaging with the driving bevel gear (20) and a second driven bevel gear (50) engaging with a third driven bevel gear (60) for rotating a driven shaft (70). A transmission assembly (80, 85) includes a first transmission plate (80) attached to the driving bevel gear (20) and the driving assembly (10a; 10b), and a second transmission plate (85) attached to the third driven bevel gear (60) and the driven shaft (70). The gears (20, 40, 50, 60) are made of a polymeric material.

## Description

The present disclosure relates to power transmission for vehicles, such as for example bicycles.

### Background

In the late 1800s, first shaft driven bicycles appeared in the United States and the United Kingdom as an alternative to chain driven bicycles which have been found to have a short shelf life, and to be dirty, greasy and noisy.

Shaft-driven or chainless bicycles include a drive shaft instead of a chain in order to transmit power from the pedals to the wheel. The main advantages of bicycles with said type of transmission are enhanced performance due to a greater efficiency in torque transmission while less maintenance is required. Furthermore, in shaft-driven transmissions there is no risk of getting dirty from contact with the chain.

With the arrival on the market of internal rear wheel hub gears, shaft driven transmissions started to be used again in bicycles over the year 2000.

Documents GB2254298A, US5078416, CN204279868U, CN112373617A and CN210526759U disclose chainless bicycle transmissions comprising bevel gears. CN110155241A and CN215399164U refer to transmissions including bevel gears to be used in electric chainless bicycles.

Shaft driven transmissions currently existing on the market have the disadvantages of being quite heavy, expensive to manufacture, and requiring periodic lubrication.

There exists an ongoing need for improved power transmissions for vehicles, for example bicycles, in which the above issues are overcome or at least reduced.

### Summary

A power transmission for vehicles is disclosed herein, in particular a power transmission for bicycles. The present power transmission can be applied both to standard bicycles and electric power-assisted bicycles. The present power transmission can be applied to many other vehicles.

The present power transmission comprises a driving assembly for rotating a driving bevel gear. A transmission shaft is also provided including a first driven bevel gear in meshing engagement with the driving bevel gear and a second driven bevel gear in meshing engagement with a third driven bevel gear for rotating a driven shaft. The first driven bevel gear and the second driven bevel gear are preferably arranged at opposite ends of the transmission shaft.

The driving bevel gear, and the first, second, and third driven bevel gears are made of a polymeric material. It is particularly preferred that said polymeric material has a tensile yield stress higher than 60 Mpa. Examples of said polymeric material may be one or more of PEEK (Polyether ether ketone), PA (Polyamide), POM (Polyoxymethylene), PPS (Polyphenylene sulfide), and PI (Polyimide). Examples are PEEK providing a tensile yield stress of 90-110 Mpa, PA providing a tensile yield stress of 70-100 Mpa, POM providing a tensile yield stress of 60-80 Mpa, PPS providing a tensile yield stress of 85-110 Mpa, and PI providing a tensile yield stress of 85-95 Mpa.

The present power transmission is lightweight and also cost-effective as it is simple to manufacture, and through a sustainable gear manufacturing process. Additives may be included to the polymeric material for example in order to avoid lubrication. The driving bevel gear, as well as the first, second, and third driven bevel gears are preferably manufactured by injection molding. Other suitable materials and manufacturing processes are not ruled out.

The present power transmission further comprises a transmission plate assembly that may be made for example of metal or carbon fiber. Said transmission assembly includes a first and second transmission plates. The first transmission plate is attached to the driving bevel gear and the driving assembly for power, i.e. torque, transmission. The second transmission plate is attached to the third driven bevel gear and with the driven shaft for torque transmission.

The above mentioned transmission assembly may further comprise a gear support attached to the second transmission plate such that the third driven bevel gear is fitted there between for torque transmission to the driven shaft.

Advantageously, the first transmission plate may have a first grooved profile that matches the geometry of the driving assembly for transmitting torque from the driving assembly to the transmission plate, and a second grooved profile that matches the geometry of the driving bevel gear for transmitting torque from the transmission plate to the driving bevel gear.

In the same way, the second transmission plate may include projecting members extending towards corresponding recesses formed in the third driven bevel gear for transmitting torque from said third driven bevel gear to said driven shaft. In general, corresponding projecting members and recesses may be formed interchangeably in the second transmission plate, the driving assembly and the driven shaft. This configuration results in an efficient torque transmission. The projecting members, whether they are formed in the second transmission plates or in at least one of the driving assembly and the driven shaft, may be arranged radially extending therefrom.

In one example, the driven shaft of the power transmission described above may be attached to a vehicle driving wheel, for example a bicycle rear wheel. A shifting transmission mechanism may be engaged with the driven shaft and a shaft of the vehicle driving wheel for controlling the speed thereof. In the case in which the vehicle is a bicycle, the above mentioned driving assembly comprises a pair of opposed driving pedals for rotating a driving shaft through the driving bevel gear that is in meshing engagement with the first driven bevel gear. Also in this case, a shifting transmission mechanism may be attached to the driven shaft for controlling the speed of a bicycle driving wheel. An electric motor may be included for rotating the driving bevel gear.

It may be advantageous that the transmission shaft includes at least one end portion having a polygonal cross-section. Such polygonal end portion is intended to fit inside a shaft cap having a corresponding polygonal cross-section. The shaft cap is formed in or attached to the at least one of the first and second driven bevel gears. For example, opposite shaft caps may be provided, formed in or attached to the first and second driven bevel gears in a way that, in use, both opposite end portions of the transmission shaft are inserted therein allowing the transmission shaft an axial sliding movement relative to the shaft caps. As a result, sufficient suitable flexibility is provided for torque transmission.

With respect to standard chain driven transmissions, the present power transmission provides a number of significant advantages. The present power transmission has been found to be more efficient due to an enhanced torque transmission while providing a smoother ride. Furthermore, it has a long operational life with a minimal or no maintenance, producing less operating noise. The present power transmission is also cleaner as no grease is required.

### Brief description of the drawings

A non-limiting example of the present disclosure will be described in the following, with reference to the appended drawings, in which:
Figure 1 is a general top view of one example of the present power transmission;
Figure 2 is a sectional view of the power transmission shown in figure 1;
Figure 3 is a detail sectional view of the driving assembly of the power transmission;
Figure 4 is a detail top view showing the driven shaft and the third driven bevel gear;
Figure 5 is an exploded perspective view of the driven shaft and the third driven bevel gear shown in figure 4;
Figure 6 is an elevational view of the first transmission plate;
Figure 7 is a detail view of the first transmission plate shown in figure 6;
Figure 8 is a perspective view of the second transmission plate;
Figure 9 is an elevational view of a right crank arm of a bicycle pedal;
Figure 10 is a perspective view of the right crank arm in figure 9;
Figure 11 is a perspective view of the right crank arm of the bicycle with the driving bevel gear;
Figure 12 is a perspective view of the transmission shaft; and
Figure 13 is a fragmentary elevational view of a bicycle including the present power transmission.

### Detailed description of examples

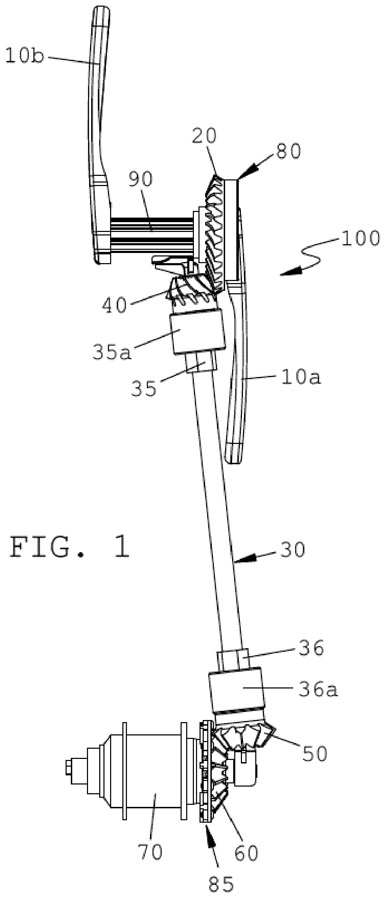

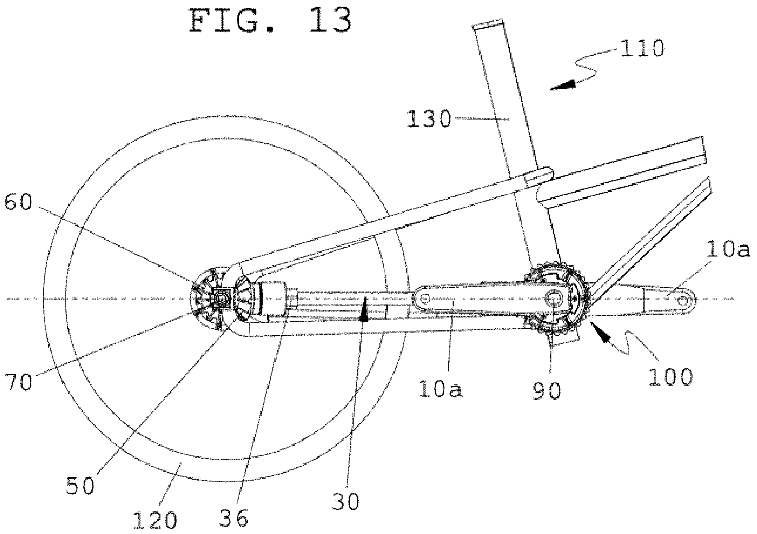

Figures 1-13 show a non-limiting example of the present power transmission 100 for vehicles, in this case applied to a bicycle 110, as shown in figure 13 of the drawings. The present power transmission 100 that will be described hereinbelow has been found to be highly efficient in transferring the cyclist's power from the pedals to the rear wheel 120 of the bicycle 110. However, the present power transmission 100 can be likewise applied to other types of vehicles.

Referring to figures 1, 2, 3 and 9-11 of the drawings, the present power transmission 100 comprises a driving assembly 10a, 10b. The driving assembly in the example shown corresponds to the right and left crank arms 10a, 10b of bicycle pedals.

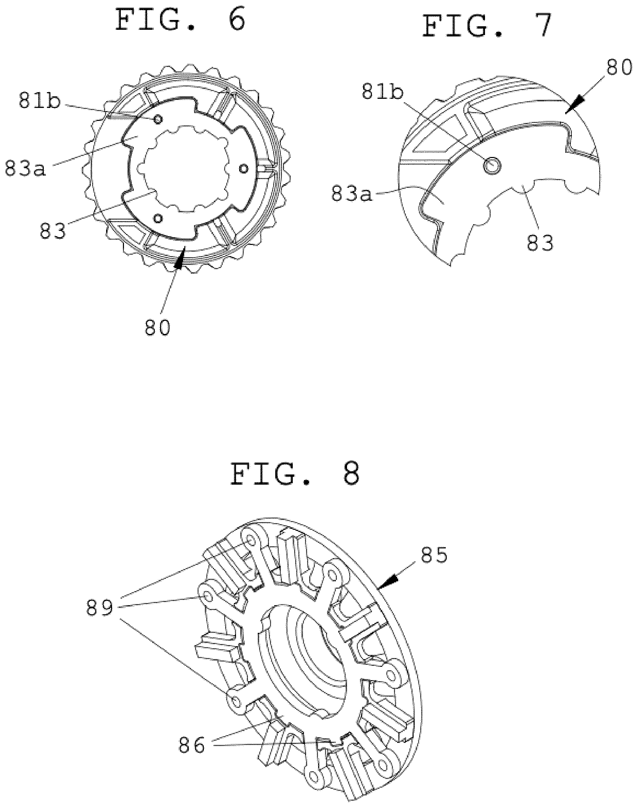

The right and left crank arms 10a, 10b of the bicycle 110 are attached to a driving shaft 90 as shown in figures 1-3. A first transmission plate 80 is screwed to the right crank arm 10a for torque transmission, as shown in figures 6, 7 and 11. The first transmission plate 80 is part of a transmission assembly that will be described further below.

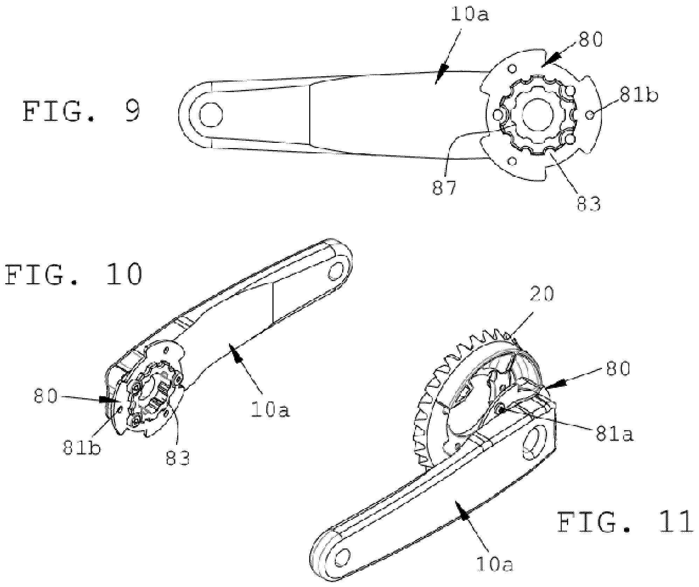

Referring to in figures 10 and 11, a driving bevel gear 20 is attached to the first transmission plate 80 through screws 81a. The screws 81a are received into holes 81b formed in the first transmission plate 80 and are received into corresponding threaded holes formed in the driving bevel gear 20.

The first transmission plate 80 is thus fixed to the right crank arm 10a of the bicycle 110, to the driving bevel gear 20, and thus to a driving shaft 90. The driving shaft 90 is attached to the right and left crank arms 10a, 10b. In use, torque is efficiently transferred from the crank arms 10a, 10b through the driving shaft 90 to the driving bevel gear 20 by the above mentioned first transmission plate 80 uniformly, without stress concentrations.

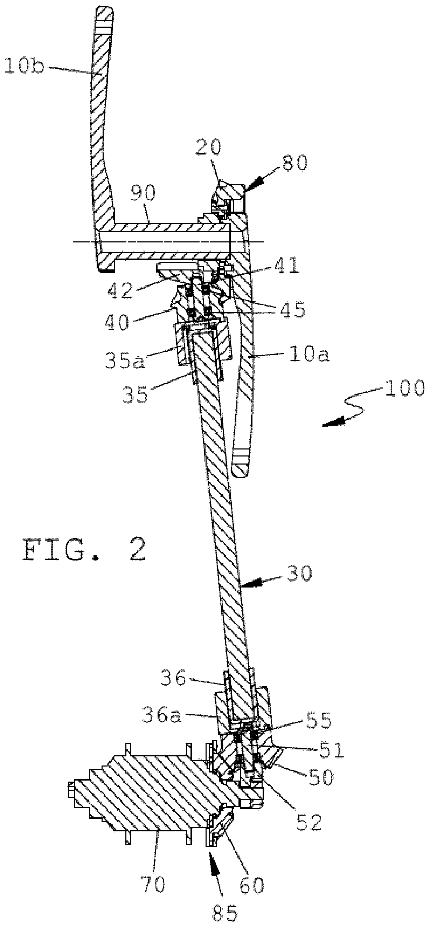

As shown in figures 1 and 2 of the drawings, the driving bevel gear 20 is in meshing engagement with a first driven bevel gear 40. The axis of the first driven bevel gear 40 is arranged at an angle of approximately 90 degrees with respect to the axis of the driving bevel gear 20 as shown in figures 1 and 2 of the drawings.

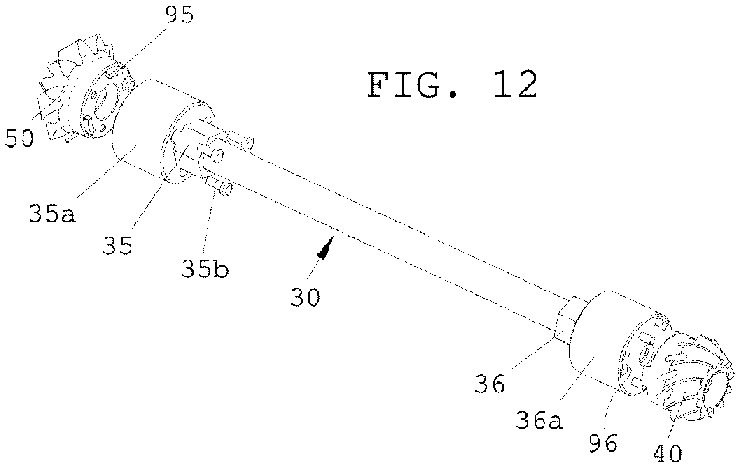

Referring now to figure 12 of the drawings, the first driven bevel gear 40 is attached to one end of a transmission shaft 30. The opposite end of the transmission shaft 30 has a second driven bevel gear 50. The second driven bevel gear 50 is in meshing engagement with a third driven bevel gear 60. The axis of the second driven bevel gear 50 is arranged at an angle of approximately 90 degrees with respect to the axis of the third driven bevel gear 60 as shown in figures 1 and 2 of the drawings.

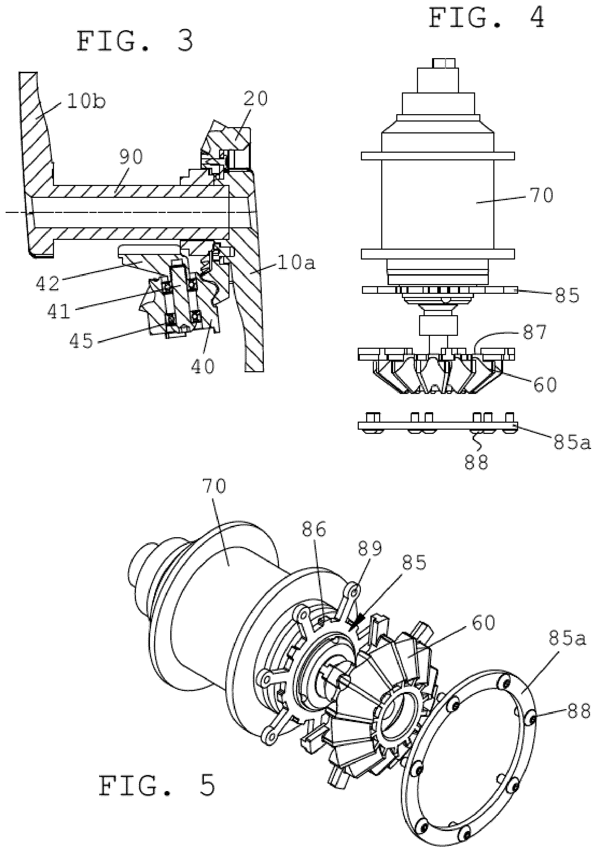

A second transmission plate 85 is screwed to the third driven bevel gear 60. Said second transmission plate 85 is part of the above mentioned transmission assembly. As shown in figures 4 and 5, said second transmission plate 85 is screwed to a gear support 85a. The gear support 85a comprises an annular plate having a number of radially distributed threaded holes for receiving screws 88 to be received into corresponding threaded holes 89 formed in the second transmission plate 85. The second transmission plate 85 is thus attached to the gear support 85a with the third driven bevel gear 60 fitted there between for suitable torque transmission to the driven shaft 70.

As shown in figure 2, the first driven bevel gear 40 is mounted on a corresponding gear shaft 41 through bearings 45. The gear shaft 41 has one threaded end to be screwed into a shaft support 42. The shaft support 42 is attached, e.g. screwed, to the bicycle frame 130. In the same way, the second driven bevel gear 50 is mounted on a corresponding gear shaft 51 through bearings 55. The gear shaft 51 has one threaded end to be screwed into a shaft support 52. The shaft support 52 is also attached, e.g. screwed, to the bicycle frame 130.

The driving bevel gear 20, as well as the first, second, and third driven bevel gears 40, 50, 60 are all made of a polymeric material such as, for example, PEEK (Polyether ether ketone), with a tensile yield stress of 90-110 Mpa; PA (Polyamide) with a tensile yield stress of 70-100 Mpa; POM (Polyoxymethylene), with a tensile yield stress of 60-80 Mpa; PPS (Polyphenylene sulfide), with a tensile yield stress of 85-110 Mpa; and PI (Polyimide), with a tensile yield stress of 85-95 Mpa. In this example, bevel gears 20, 40, 50, 60 are all are manufactured by injection molding. Additives may be included into the polymeric material for example for avoiding lubrication.

The first driven bevel gear 40 and the second driven bevel gear 50 are respectively attached to the opposite ends of the transmission shaft 30 as shown in figures 2 and 12 of the drawings. The transmission shaft 30 has end portions 35, 36 having a polygonal cross-section, specifically a hexagonal cross-section in the non-limiting example illustrated in figure 12. Such particular shape of the cross-section of said end portions 35, 36 of the transmission shaft 30 is intended to fit inside corresponding opposite shaft caps 35a, 36a formed in or attached to the first and second driven bevel gears 40, 50, respectively, as shown in figures 1, 2 and 12 of the drawings. This configuration allows rotary movement to be efficiently transmitted from the first driven bevel gear 40 to the transmission shaft 30, through said end portion 35, and from the transmission shaft 30 to the second driven bevel gear 50, through said end portion 36 while providing an efficient operation.

More specifically, referring now back to figure 12 of the drawings, the shaft cap 35a is attached to the end portion 35 of the transmission shaft 30 through screws 35b. In the same way, the shaft cap 36a is attached to the opposite end portion 36 of the transmission shaft 30 through screws, not shown in figure 12. In turn, the shaft caps 35a, 36a are attached to the second and first driven bevel gears 50, 40 respectively by fitting protrusions and cavities 95, 96. In the particular example shown in figure 12, protrusions 95 are formed in the second driven bevel gear 50 and cavities are formed in the shaft cap 35a. The end portion 35 of the transmission shaft 30 is attached to the second driven bevel gear 50. Although not shown, corresponding cavities are formed in the shaft cap 36a, and corresponding protrusions are formed in the first driven bevel gear 40. In this way, the power transmission 100 can be thus assembled and disassembled easily.

The shaft caps 35a, 36a are configured for receiving the respective end portions 35, 36 such that the transmission shaft 30 is capable of relative axial sliding relative thereto, thus providing for sufficient flexibility for torque transmission. Furthermore, the transmission shaft 30 can be mounted after the first and second driven bevel gears 40, 50 are mounted in their respective positions. As a result, assembly operations are facilitated. In addition, the relative axial sliding of the end portions 35, 36 of the transmission shaft 30 within the shaft caps 35a, 36a provides flexibility as stated above so that manufacturing tolerances due to deformations of the bicycle frame 130 caused by the rider's weight and pedaling effort when in use can be suitably compensated. The present power transmission 100 can be mounted on a less rigid and lighter frame 130.

In use, the first transmission plate 80 transmits torque from the right crank arm 10a of the bicycle 110 to the driving bevel gear 20. The first transmission plate 80 is provided with a first grooved profile 83 that matches the geometry of the right crank arm 10a. The first transmission plate 80 is also provided with a second grooved profile 83a that matches the geometry of the driving bevel gear 20. Thus, in use, the first transmission plate 80 receives torque from the crank arms 10a, 10b through said first grooved profile 83 and transmits it to the driving bevel gear 20 through said second grooved profile 83a.
the driving bevel gear 20 as shown in figures 6, 7, and 10 of the drawings. In the same way, in use, the second transmission plate 85 transmits torque from the third driven bevel gear 60 to the driven shaft 70. More specifically, the second transmission plate 85 includes projecting members 86 radially extending towards corresponding recesses 87 formed in the third driven bevel gear 60 as shown in figures 4 and 5 of the drawings.

In order to assemble the transmission shaft 30, the shaft caps 35a, 36a are arranged so that the transmission shaft 30 becomes properly aligned with the first and second driven bevel gears 40, 50. The end portions 35, 36 of the transmission shaft 30 are then attached to the first and second driven bevel gears 40, 50 through the screws 35b and the shaft caps 35a, 36a are attached to the respective first and second driven bevel gears 40, 50 by fitting the above mentioned protrusions and cavities 95 formed in the first and second driven bevel gears 40, 50 into corresponding protrusions and cavities 96 formed in the shaft caps 35a, 36a.

Referring back to figure 1 and 2 of the drawings, in use, the second driven bevel gear 50 transmits movement to the third driven bevel gear 60. The third driven bevel gear 60 may be positively attached to the driven shaft 70 or it may be mounted on a simple hub, or on a hub with internal gear, or on a hub with an electric motor, not shown in the drawings. The electric motor could be provided in or coupled to the driven shaft 70 or the driving shaft 90. The third driven bevel gear 60 transmits torque to the second transmission plate 85 and thus to the driven shaft 70 as shown in figures 4 and 5.

The driven shaft 70 is, in the specific example shown, attached to a rear driving wheel 120 of a bicycle 110 one example of which is depicted in figure 13. Although not shown, a shifting transmission mechanism could be engaged with the driven shaft 70 and the rear driving wheel 120 for controlling the speed of the bicycle 110.

The power transmission 100 described above is lightweight and provides smooth, quiet and efficient torque transmission from the pedals to the rear wheel 120 of the bicycle 110. The power transmission 100 described above is easy to manufacture so it is cost-effective and can be manufactured through a sustainable manufacturing process.

Although one example of the present power transmission has been disclosed herein, other alternatives, modifications, uses and/or equivalents thereof are possible. Furthermore, all possible combinations in the disclosed example are also covered. The scope of the present disclosure should not be limited by the particular example but should be determined only by a fair reading of the claims that follow.

Reference signs related to drawings placed in parentheses in a claim are solely for attempting to increase the intelligibility of the claim and shall not be construed as limiting the scope of the claim.

## Claims

1. Power transmission for vehicles (100), the power transmission (100) comprising:
- a driving assembly (10a; 10b) for rotating a driving bevel gear (20); and
- a transmission shaft (30) having:
- a first driven bevel gear (40) in meshing engagement with the driving bevel gear (20); and
- a second driven bevel gear (50) in meshing engagement with a third driven bevel gear (60) for rotating a driven shaft (70),
wherein the driving bevel gear (20), and the first, second, and third driven bevel gears (40, 50, 60) are made of a polymeric material, and
wherein it further comprises a transmission assembly (80, 85) including:
- a first transmission plate (80) attached to the driving bevel gear (20) and with the driving assembly (10a; 10b) for torque transmission; and
- a second transmission plate (85) attached to the third driven bevel gear (60) and with the driven shaft (70) for torque transmission.

2. The power transmission (100) of claim 1, wherein the transmission assembly (85) further comprises a gear support (85a) attached to the second transmission plate (85) such that the third driven bevel gear (60) is fitted therebetween for torque transmission to the driven shaft (70).

3. The power transmission (100) of claim 2, wherein the first transmission plate (80) has a first grooved profile (83) that matches the geometry of the driving assembly (10a, 10b) for transmitting torque from the driving assembly (10a, 10b) to the transmission plate (80), and a second grooved profile (83a) that matches the geometry of the driving bevel gear (20) for transmitting torque from the transmission plate (80) to the driving bevel gear (20).

4. The power transmission (100) of claim 2 or 3, wherein the second transmission plate (85) includes projecting members (86) extending towards corresponding recesses formed in the third driven bevel gear (60) for transmitting torque from the third driven bevel gear (60) to the driven shaft (70).

5. The power transmission (100) of any preceding claim, wherein the polymeric material has a tensile yield stress higher than 60 Mpa.

6. The power transmission (100) of any preceding claim, wherein the polymeric material is at least one of PEEK (Polyether ether ketone), PA (Polyamide), POM (Polyoxymethylene), PPS (Polyphenylene sulfide), and PI (Polyimide).

7. The power transmission (100) of any preceding claim, wherein the driving bevel gear (20), and the first, second, and third driven bevel gears (40, 50, 60) are manufactured by injection molding.

8. The power transmission (100) of any preceding claim, wherein the transmission assembly (80, 85) is made of metal or carbon fiber.

9. The power transmission (100) of any preceding claim, wherein the driven shaft (70) is attached to a vehicle driving wheel.

10. The power transmission (100) of any preceding claim, wherein it further includes a shifting transmission mechanism engaged with the driven shaft (70) and the vehicle driving wheel for controlling the speed thereof.

11. The power transmission (100) of any preceding claim, wherein the transmission shaft (30) includes at least one end portion (35, 36) having a polygonal cross-section to fit inside a shaft cap formed in or attached to the at least one of the first and second driven bevel gears (40, 50), the interior of said shaft cap and having a corresponding polygonal cross-section.

12. The power transmission (100) of claim 11, wherein the first and second driven bevel gears (40, 50) are fitted into opposite shaft caps such that the transmission shaft (30) is capable of axial movement relative thereto.

13. A bicycle comprising the power transmission (100) of any preceding claim, wherein the driving assembly comprises a pair of opposed driving pedals (10a, 10b) for rotating a driving shaft (90) through the driving bevel gear (20), and wherein the driven shaft (70) is attached to a vehicle driving wheel.

14. The bicycle of claim 13, wherein the bicycle further includes a shifting transmission mechanism attached to the driven shaft (70) for controlling the speed of a bicycle driving wheel.

15. The bicycle of claim 13 or 14, wherein the bicycle further includes an electric motor for rotating the driving bevel gear (20).
